Europäisches Patentamt

European Patent Office       (11) Publication number: **0 038 347**

Office européen des brevets                            **B1**

(12)                  **EUROPEAN PATENT SPECIFICATION**

(45) Date of publication of patent specification: **16.02.83**          (51) Int. Cl.³: **C 07 C 67/02, C 07 C 69/30, B 01 F 17/34**

(21) Application number: **80902109.0**

(22) Date of filing: **23.11.79**

(86) International application number: **PCT/DK79/00053**

(87) International publication number: **WO 81/01286 14.05.81 Gazette 81/12**

(54) **PROCESS FOR THE PREPARATION OF PARTIAL ESTERS WITH EMULSIFYING EFFECT.**

(30) Priority: **01.11.79 DK 4638/79**

(43) Date of publication of application:
**28.10.81 Bulletin 81/43**

(45) Publication of the grant of the patent:
**16.02.83 Bulletin 83/7**

(84) Designated Contracting States:
**AT CH DE FR GB NL SE**

(56) References cited:
**None**

(73) Proprietor: **NEXUS APS**
**Palsgaard**
**DK-7130 Juelsminde (DK)**

(72) Inventor: **DREYER, Jack Allan**
**Hojvangen 30**
**DK-8700 Horsens (DK)**
Inventor: **SCHOU, Herbert**
**Palsgaard**
**DK-7130 Juelsminde (DK)**

(74) Representative: **Smith, Sydney et al,**
**Elkington and Fife High Holborn House 52/54**
**High Holborn**
**London WC1V 6SH (GB)**

Courier Press, Leamington Spa, England

Process for the preparation of partial esters with emulsifying effect

The present invention relates to a process for the preparation of partial esters of glycerine condensates with carboxylic acids of the type present in natural triglycerides, that is, fatty acids of 4—26 carbon atoms, in the following designated "$C_{4-26}$ fatty acids".

Partial esters of the above-mentioned type which, in addition to the esterified hydroxy groups, contain free hydroxy groups, are of great commercial importance as emulsifiers in the food and stimulant industry, for example for the preparation of baking mixes, margarine, minarine, mayonnaise and salads, and as emulsifiers for use in technical emulsions or emulsions for use within agriculture, e.g. "calf milk".

Such partial esters useful as emulsifiers are conventionally produced in a commercial scale by heating a mixture of on the one hand a glycerine condensate or glycerine condensates and on the other hand one or more fatty acids or a natural fat, that is, a material substantially consisting of triglycerides, to a high temperature of the order of 200—260°C, often in the presence of a basic catalyst such as sodium hydroxide. However, at the high temperature employed, by-products may be formed which impart, to the resulting material, an undesired colour and flavour and which may be undesired from the point of view of nutrition.

According to the invention, it has now been found that in the preparation of partial esters of glycerine condensates with $C_{4-26}$ fatty acids by reacting glycerine condensates with fatty acid glycerides, excellent results are obtained when the reaction is performed using tertiary butyl alcohol as solvent.

The invention is based on this recognition and relates to a process for preparing partial esters of glycerine condensates with $C_{4-26}$ fatty acids by reacting glycerine condensates with fatty acid glycerides in the presence of a basic catalyst, which process is characterized in that the reaction is performed using tertiary butyl alcohol as solvent.

In comparison with products prepared at high temperature without the use of solvent, the products prepared by the process according to the invention are distinguished by improved colour, odour and flavour, and their emulsifying effect is particularly good. Furthermore, in the process according to the invention, no further condensation of the glycerine condensate material used takes place; in the conventional high-temperature method, such further condensation does take place, which, i.e., means that the possible uses of the non-esterified glycerine condensate material separated after the reaction are limited, and the continuous condensation *per se* makes an effective control of the process difficult, which makes it more difficult to obtain as well-defined products as by the process according to the invention. Furthermore, it has been found that particularly good yields may be obtained by the esterification by the process according to the invention. Besides, it has been found that tertiary butyl alcohol can be removed effectively from the esters formed, which is of considerable importance for a product which is to be used in nutrients at a time when, to an increasing degree, consumers and authorities call for nutrients being free of foreign substances.

As fatty acid glyceride starting material may, for example, be used fats or fat mixtures (triglycerides) and diglycerides or diglyceride mixtures, and the fats or fat mixtures may also naturally contain or be mixed with major or minor amounts of diglycerides. The diglyceride materials may be the result of other productions of for example emulsifiers. Monoglycerides may also be contained in the starting material. In the process of the invention, a natural fat is usually used which may have been treated chemically, e.g. refined or completely or partially hardened. Examples of suitable fats may be ox tallow, butterfat, lard, herring oil, whale oil, palm fat, cocoa butter and vegetable oils such as rape oil, peanut oil, soya oil and coconut oil, and these fats mentioned as examples may be refined and, as regards the oils, completely or partially hardened.

The expression "glycerine condensates" is herein taken to mean products which are formed by coupling of two or more molecules of glycerine with water separation. These glycerine condensates, still containing free hydroxy groups, may be constituted by for example 2—10 glycerine units and will usually be in the form of mixtures containing fractions of different chain lengths, usually also containing monomer glycerine. Glycerine condensates may, e.g., be prepared by heating glycerine to a relatively high temperature in the presence of a basic catalyst, thereby usually obtaining complex mixtures of viscosities of more than 0.3 Pa.s (300 centipoise), measured at 60°C, and very interesting mixtures of this type have viscosities in the range of 0.7—1.4 Pa.s (700—1400 centipoise), measured at 60°C, but also materials of higher viscosities may be interesting starting materials in the process according to the invention. By the process according to the invention it is possible to use a starting material which in addition to glycerine condensates (with their optional content of monomer glycerine), contains minor amounts of added monomer glycerine, just as propylene glycol may be contained in the starting material. A special feature of the process according to the invention is that a glycerine condensate material of a quite specific character or composition may be used to yield products of a corresponding specific character or composi-

2

tion as in the process according to the present invention, in contrast to the conventional process, no further condensation of the glycerine condensate material takes place.

As the reesterification reaction performed according to the invention is sensitive to water, the starting materials and the alcohol material used should be substantially water-free.

As mentioned above, the process according to the invention is performed in the presence of a basic catalyst. An alkalimetal base such as sodium hydroxide, sodium carbonate, lithium hydroxide, potassium hydroxide or potassium carbonate or mixtures thereof are preferably used as a catalyst. For most purposes it is preferred to use sodium hydroxide or potassium carbonate, which both have a good catalytic effect with respect to the reesterification reaction.

Suitably, the process of the invention may be performed by heating the reaction mixture, for example to at least 60°C, especially at least 70°C and preferably at the boiling point under reflux, but it is also possible to work at a temperature level which is above the boiling point of tertiary butyl alcohol, then using an overpressure; hereby, shorter reaction times are obtained.

Like the subsequent treatments of the product the reaction may be performed in batches or continuously.

Subsequent to the reaction, which is normally completed in less than 1 hour, the basic catalyst is normally neutralized, for example with phosphoric acid, and tertiary butyl alcohol is evaporated, suitably on a thin layer evaporator. The remaining mixture will usually separate into a glycerine condensate phase and a fatty phase consisting, to a major extent, of the reaction product. The fatty phase may, e.g., be separated from the glycerine condensate phase by centrifuging or decanting and may *per se* be the desired end product as it shows excellent emulsifying properties. The glycerine condensate material dissolved in the product may, if desired, be removed, e.g. by selectively dissolving the ester component of the product, that is, the desired emulsifier-active reaction product, in a suitable solvent, for example a hydrocarbon, and separating the glycerine condensate material insoluble in the solvent, whereafter the ester product may be worked up, e.g., by evaporation of the solvent. Removal of the glycerine condensate component by washing with water and/or aqueous liquids, e.g., aqueous saline solutions in a manner known *per se*, is also possible. Such a washing will simultaneously remove practically quantitatively any residues of tertiary butyl alcohol. Any residues of tertiary butyl alcohol may also be removed practically quantitatively by vigorous vacuum treatment, for example in a thin layer evaporator. If desired, also the ester product *per se* may be fractionated in a known manner, for example to obtain fractions with specific desired properties, which fractionation may be performed by means of solvents, for example by recrystallisation.

By the process according to the invention interesting products are obtained by using, as starting materials, a glycerine condensate and triglyceride in a weight ratio of about 20—70:80—30. Products of great commercial importance are obtained, when the weight ratio of glycerine condensate to triglyceride is 40—65:60—35. Suitably, 0.4—4 parts by volume of tertiary butyl alcohol per part by weight of the combined starting material are used, and it is especially preferred to use 0.1—0.5 liters, particularly 0.15—0.4 liters, of tertiary butyl alcohol per 450 g of the combined starting materials. Here, the catalyst is suitably sodium hydroxide, and the best results are obtained when this is added in an amount of 0.5—10 g per 450 g of the combined starting materials, but the added amount of basic catalyst must, of course, be adjusted to the pH of the glycerine condensate material, which may in itself contain a base originating from the preparation of the material.

The process according to the invention is further illustrated in the following examples:

Example 1

607.5 g of glycerine condensate with a viscosity, measured at 70°C, of 0.5 Pa.s (500 centipoise), and 742.5 g of soya oil are used as starting materials. 6 g of sodium hydroxide are used as catalyst, and 750 ml of tertiary butyl alcohol are used as solvent. In a reaction tank provided with reflux condenser and steam jacket and sodium hydroxide is firstly dissolved in the glycerine condensate with stirring and heating to 120—130°C for 35 minutes, and thereafter the other components mentioned are added. The whole mixture is heated to the reflux temperature (89—96°) and thereafter kept at this temperature with reflux for 60 minutes. (After refluxing for 50 minutes the mixture is completely clear). Thereafter, the reaction mixture is neutralized with 10.05 ml of 86% phosphoric acid, and then it is filtered and evaporated on a rotary evaporator at 130—140°C and a pressure of (30 mm Hg abs). After decanting from glycerine condensate precipitated by standing, a fat phase of 1163 g with a saponification value of 128.0, an acid value of 7.8 and a pH of 3.8 is obtained.

Example 2

202.5 g of glycerine condensate with a viscosity, measured at 70°C, of 0.5 Pa.s (500 centipoise), and 247.5 g of coconut oil are used as starting materials. 2 g of sodium hydroxide are used as catalyst, and 250 ml of tertiary butyl alcohol are used as solvent. In a reaction tank provided with reflux condenser and steam jacket the sodium hydroxide is firstly dissolved in the glycerine condensate with stirring and heating to 120—130°C for 30 minutes. Thereafter the other components mentioned are added, whereafter the temperature is raised until the mixture is boiling, and at this temperature (90—96°C) refluxing is performed for 60 minutes. After refluxing for 22 minutes, the reaction mixture is completely clear. After the reaction is completed, the mixture is neutralized with 3.35 ml of 86% phosphoric acid and thereafter filtered, and the filtrate is evaporated in a rotary evaporator at 130—140°C and a pressure of 4000 Pa (30 mm Hg abs). The fat phase totals 423 g and has a saponification value of 152.8, an acid value of 7.9 and a pH value of 4.0.

### Example 3

Initially, butterfat was prepared from unleavened butter, heating the latter to about 80°C and leaving it at this temperature for 45 minutes and thereafter decanting the fat phase and evaporating twice on thin layer evaporator at 130°C and 5333 Pa (40 mm Hg abs). The following recipe was used:

| | |
|---|---|
| 3.7 kg | of polyglycerine condensate, viscosity 0.5 Pa.s (500 centi-poise) at 70°C |
| 37 g | of sodium hydroxide |
| 4.5 kg | of butterfat |
| 3.7 kg | of tertiary butyl alcohol. |

Initially, the sodium hydroxide was dissolved in the polyglycerine at 130°C with stirring for 45 minutes, thereafter the other components were added, and the reaction was performed at 88—93°C with reflux for 70 minutes. After neutralization with 58 ml of 86% phosphoric acid, the product was finally evaporated several times on thin layer evaporator. Before the last two evaporations, a water amount totalling 5% of the product was added. The yield was 7.25 kg of product with a saponification value of 138.7, an acid value of 7.0, and a pH of 3.8. The product had a nice yellow colour and showed a paste-like consistency after crystallisation.

### Example 4

The following recipe was used:

| | |
|---|---|
| 18 kg | of glycerine condensate, viscosity 0.5 Pa.s (500 centipoise) at 70°C |
| 22 kg | of fully hardened tallow |
| 178 g | of sodium hydroxide |
| 22.2 | liters of tertiary butyl alcohol. |

Initially, the sodium hydroxide was dissolved in the glycerine condensate at 130—135°C with stirring for 45 minutes, and thereafter the melted tallow and tertiary butyl alcohol were added, and the mixture was heated to reflux temperature (88—95°C) and kept at this temperature for 65 minutes and thereafter neutralized with 298 ml of 86% phosphoric acid, whereafter the solvent was evaporated on thin layer evaporator, and the precipitated glycerine condensate was separated. The resulting product had a saponification value of 129.3, an acid value of 8.5, and a pH of 4.9.

### Comparison example

A polyglycerine ester is prepared at high temperature (known art) according to the following recipe:

| | |
|---|---|
| 22.5 kg | of glycerine condensate, viscosity 0.5 Pa.s (500 centipoise) at 70°C |
| 27.5 kg | of fully hardened tallow |
| 222 g | of sodium hydroxide. |

All of the raw materials are from the same batch as in Example 4. Initially, the sodium hydroxide was dissolved in the glycerine condensate with stirring for 45 minutes at 130—135°C, and thereafter the melted tallow was added, and the mixture was heated to 240°C and kept at this temperature for 1 hour. After cooling to 220°C, the reaction product was neutralized with 3.72 ml of 86% phosphoric acid and further cooled to about 160°C, whereafter the undissolved glycerol condensate was separated. The ester thus produced has a saponification value of 140.4, an acid value of 8.7, and a pH of 6.1.

Comparison with Example 4 shows that the saponification value of the product prepared in tertiary butyl alcohol (Example 4) is significantly lower than that of the product prepared at high temperature, which shows a better esterification by the process in tertiary butyl alcohol.

## Claims

1. A process for the preparation of partial esters of glycerine condensates with $C_{4/26}$ fatty acids by reacting glycerine condensates with fatty acid glycerides in the presence of a basic catalyst, characterized in that the reaction is performed in tertiary butyl alcohol as solvent.

2. A process as claimed in claim 1, characterized in that an alkalimetal base is used as basic catalyst.

3. A process as claimed in claim 2, characterized in that sodium hydroxide or potassium carbonate is used as alkalimetal base.

4. A process as claimed in any one of the preceding claims, characterized in that the weight ratio of glycerine condensate to fatty acid glyceride material is about 20—70:80—30.

5. A process as claimed in claim 4, characterized in that the ratio is 40—65:60—35.

6. A process as claimed in any one of the preceding claims, characterized by using 0.4—4 parts by volume of tertiary butyl alcohol per part by weight of the combined starting materials.

7. A process as claimed in claim 6, characterized by using 0.1—0.5 liter of tertiary butyl alcohol per 450 g of the combined starting materials.

## 7

**0 038 347**

## 8

8. A process as claimed in any one of the preceding claims, characterized by using butterfat as triglyceride material.

## Revendications

1. Procédé de préparation d'esters partiels de condensés de glycérine avec des acides gras en $C_4$ à $C_{26}$ en faisant réagir des condensats de glycérine avec des glycérides d'acides gras en présence d'un catalyseur basique, caractérisé en ce qu'on conduit la réaction dans l'alcool butylique tertiaire comme solvant.

2. Procédé selon la revendication 1, caractérisé en ce qu'on utilise une base de métal alcalin comme catalyseur basique.

3. Procédé selon la revendication 2, caractérisé en ce qu'on utilise de l'hydroxyde de sodium ou du carbonate de potassium comme base de métal alcalin.

4. Procédé selon l'une quelconque des revendications précédentes, caractérise en ce que le rapport pondéral du condensat de glycérine à la matière glycéride d'acide gras est d'environ 20—70 : 80—30.

5. Procédé selon la revendication 4, caractérisé en ce que le rapport est de 40—65 : 60—35.

6. Procédé selon l'une quelconque des revendications précédentes, caractérisé en ce qu'on utilise de 0,4 à 4 parties en volume d'alcool butylique tertiaire par partie pondérale des produits de départ combinés.

7. Procédé selon la revendication 6, caractérisé en ce qu'on utilise de 0,1 à 0,5 litre d'alcool butylique tertiaire pour 450 g des produits de départ combinés.

8. Procédé selon l'une quelconque des revendications précédentes, caractérisé en ce qu'on utilise de la graisse de beurre comme matière triglycéride.

## Patentansprüche

1. Verfahren zur Herstellung von Partialestern von Glycerinkondensaten mit $C_{4-26}$-Fettsäuren durch Umsetzung von Glycerinkondensaten mit Fettsäureglyceriden in Gegenwart eines basischen Katalysators, dadurch gekennzeichnet, daß die Umsetzung in tert-Butylalkohol als Lösungsmittel durchgeführt wird.

2. Verfahren nach Anspruch 1, dadurch gekennzeichnet, daß als basischer Katalysator eine Alkalimetallbase verwendet wird.

3. Verfahren nach Anspruch 2, dadurch gekennzeichnet, daß als Alkalimetallbase Natriumhydroxid oder Kaliumcarbonat verwendet wird.

4. Verfahren nach einem der vorhergehenden Ansprüche, dadurch gekennzeichnet, daß das Gewichtsverhältnis von Glycerinkondensat zu Fettsäureglyceridmaterial etwa 20 bis 70:80 bis 30 beträgt.

5. Verfahren nach Anspruch 4, dadurch gekennzeichnet, daß das Verhältnis 40 bis 65:60 bis 35 beträgt.

6. Verfahren nach einem der vorhergehenden Ansprüche, dadurch gekennzeichnet, daß 0,4 bis 4 Volumenteile tert-Butylalkohol pro Gewichtsteil der kombinierten Ausgangsmaterialien verwendet werden.

7. Verfahren nach Anspruch 6, dadurch gekennzeichnet, daß 0,1 bis 0,5 Liter tert-Butylalkohol pro 450 g der kombinierten Ausgangsmaterialien verwendet werden.

8. Verfahren nach einem der vorhergehenden Ansprüche, dadurch gekennzeichnet, daß Butterfett als Triglyceridmaterial verwendet wird.